# EUROPEAN PATENT SPECIFICATION

(11) **EP 3 560 715 B1**
(45) Date of publication and mention of the grant of the patent: **07.07.2021**
(21) Application number: 18169441.5
(22) Date of filing: 26.04.2018
(51) Int. Cl.: B33Y 40/00, B08B 15/02, B29C 64/364, B22F 3/105

(54) **MODELING APPARATUS**
MODELLIERUNGSVORRICHTUNG
APPAREIL DE MODÉLISATION

(43) Date of publication of application: 30.10.2019
(73) Proprietor: Nabtesco Corporation, Tokyo 102-0093 (JP)
(72) Inventor: ISHIYAMA, Shigetoshi, Chiyoda-ku, Tokyo 102-0093 (JP); KATO, Tomotsugu, Chiyoda-ku, Tokyo 102-0093 (JP); KITAMURA, Mitsuhisa, Chiyoda-ku, Tokyo 102-0093 (JP); TOMIE, Takashi, Yachiyo-shi, Chiba 276-0046 (JP); TSUCHIDA, Kenichi, Yachiyo-shi, Chiba 276-0046 (JP)
(74) Representative: Grünecker Patent- und Rechtsanwälte PartG mbB

(56) References cited:
- WO-A1-2017/199388
- JP-A- 2018 003 148
- US-A1- 2016 207 147

## Description

### TECHNICAL FIELD

The present invention relates to a modeling apparatus.

### BACKGROUND ART

As described in Japanese National Phase Laid-Open Patent Publication No. 2011-526222, a known modeling apparatus irradiates powdered material with laser to manufacture a three-dimensional model. The modeling apparatus manufactures a three-dimensional model by irradiating layers corresponding to transverse sectional regions of the three-dimensional model to sequentially solidify the layers.

In such a modeling apparatus, the irradiation of powdered material with laser generates smoke-like substance referred to as fumes (dust, haze, vapor, volatile particles formed when heating or subliming powdered material). The generated fumes rise and block the path of the laser. This reduces the irradiation amount of the laser. Accordingly, International Patent Publication No. 2011/049143 describes a modeling apparatus that produces a local flow of gas in a chamber so that the path of the laser is not blocked by the generated fumes. The modeling apparatus includes a circulation passage that suctions the gas from the chamber and supplies the gas to the chamber. A filter is arranged in the circulation passage to remove fumes from the gas and restore the gas.

An additive processing apparatus having the foregoing structure is also disclosed by US 2016/0207147 A1. This document further discloses lowering the oxygen/moisture content by venting used cover gas from the chamber.

### SUMMARY OF THE INVENTION

### PROBLEMS THAT ARE TO BE SOLVED BY THE INVENTION

The modeling apparatus may include an adsorption device that adsorbs oxygen and moisture from the gas. Such an adsorption device adsorbs oxygen and moisture from the gas and releases the adsorbed oxygen and moisture into the atmosphere when appropriate. However, in a model preparation stage (mainly, immediately after activation of modeling apparatus), the oxygen concentration and the moisture concentration in the chamber are high. Thus, the adsorption amount of the adsorption device may reach the upper limit.

The present invention is made in view of such circumstances, and its objective is to provide a modeling apparatus that avoids situations in which the oxygen and moisture adsorption amount of the adsorption device reaches the upper limit in the model preparation stage.

### MEANS FOR SOLVING THE PROBLEM

In order to solve the above problem, a modeling apparatus according to claim 1 is provided. A modeling apparatus disclosed herein manufactures a three-dimensional model by repeating a process of irradiating a powder layer formed from a powdered material with laser to partially solidify the powder layer. The modeling apparatus includes a discharge port, a suction port, an adsorption device, a plurality of circulation passages, a determination unit, and a switching unit. The discharge port discharges gas for removing fumes into a chamber. The suction port suctions the gas from the chamber. The adsorption device adsorbs at least one of oxygen and moisture from the gas. The plurality of circulation passages connect the discharge port and the suction port and circulate the gas from the suction port to the discharge port. The circulation passages include a first circulation passage in which the adsorption device is arranged and a second circulation passage in which the adsorption device is not arranged. The determination unit determines whether the chamber is filled with the gas. The switching unit switches a circulation state of the gas in the circulation passages so that the gas passes through only the second circulation passage, among the first circulation passage and the second circulation passage, until the determination unit determines that the chamber is filled with the gas and so that the gas passes through at least the first circulation passage, among the first circulation passage and the second circulation passage, from when the determination unit determines that the chamber is filled with the gas.

With the above configuration, gas does not pass through the adsorption device from when the modeling apparatus is activated to when the chamber is filled with the gas. This avoids situations in which the oxygen and moisture adsorption amount reaches the upper limit.

Preferably, the modeling apparatus further includes a flowmeter that detects a flow amount of the gas flowing through the second circulation passage, and the determination unit determines that the chamber is filled with the gas if a cumulative value of the flow amount of the gas detected by the flowmeter reaches a predetermined amount.

With the above configuration, the gas flow amount in the second circulation passage is cumulated to determine whether the chamber is filled with the gas. Thus, appropriate determinations can be made in accordance with the gas flow amount.

Preferably, the modeling apparatus further includes an oxygen concentration detector that detects an oxygen concentration in the chamber. Preferably, the adsorption device includes an oxygen adsorption unit that adsorbs oxygen, and the determination unit determines whether or not the chamber is filled with the gas based on whether or not the oxygen concentration in the chamber is less than or equal to a predetermined value.

The above configuration performs direct determination based on the oxygen concentration in the chamber so as to avoid situations in which the oxygen adsorption amount of the adsorption device reaches the upper limit.

Preferably, in the modeling apparatus, the determination unit determines that the chamber is filled with the gas if a preset time elapses from when the discharge of the gas is started.

The above configuration determines whether the chamber is filled with gas based on a preset time. Thus, there is no need for a special detection means to perform the determination.

Preferably, in the modeling apparatus, upon completion of modeling of the three-dimensional model, the switching unit performs switching so that the gas passes through only the second circulation passage, among the first circulation passage and the second circulation passage.

With the above configuration, after modeling of the three-dimensional model is completed, unnecessary gas does not pass through the adsorption device. Thus, the performance of the adsorption device is not lowered by such passage of gas.

Preferably, in the modeling apparatus, the adsorption device includes an inlet valve that closes an inlet through which the gas flows into the adsorption device and an outlet valve that closes an outlet through which the gas flows out of the adsorption device.

With the above configuration, for example, after modeling of the three-dimensional model Is completed, the inlet and outlet of the adsorption device are closed. This forms a sealed space so that the performance of the adsorption device is not lowered.

### EFFECT OF THE INVENTION

The present invention succeeds in avoiding situations in which the oxygen and moisture adsorption amount of the adsorption device reaches the upper limit in the model preparation stage.

Other aspects and advantages of the present invention will become apparent from the following description, taken in conjunction with the accompanying drawings, illustrating by way of example the principles of the invention.

### BRIEF DESCRIPTION OF THE DRAWINGS

Fig. 1 is a schematic diagram illustrating the configuration of a modeling apparatus according to one embodiment.
Fig. 2 is a block diagram illustrating the electrical configuration of the modeling apparatus according to the embodiment.
Figs. 3(a) to 3(d) are timing charts illustrating the operation of the modeling apparatus according to the embodiment, in which Fig. 3(a) shows the changes in the oxygen concentration, Fig. 3(b) shows the operation of a first switching valve, Fig. 3(c) shows the operation of a second switching valve, and Fig. 3(d) shows the operation of open-close valves of an adsorption device.
Fig. 4 is a flowchart illustrating the control of the modeling apparatus according to the embodiment.
Fig. 5 is a flowchart illustrating the control of the modeling apparatus according to the embodiment.
Fig. 6 is a diagram illustrating a circulation passage of the modeling apparatus according to the embodiment.
Fig. 7 is a diagram illustrating the circulation passage of the modeling apparatus according to the embodiment.
Fig. 8 is a diagram illustrating the circulation passage of the modeling apparatus according to the embodiment.
Fig. 9 is a diagram illustrating a modification of the circulation passage of the modeling apparatus.
Fig. 10 is a diagram illustrating a modification of the circulation passage of the modeling apparatus.
Fig. 11 is a diagram illustrating a modification of the circulation passage of the modeling apparatus.
Fig. 12 is a diagram illustrating a modification of the circulation passage of the modeling apparatus.

### MODES FOR CARRYING OUT THE INVENTION

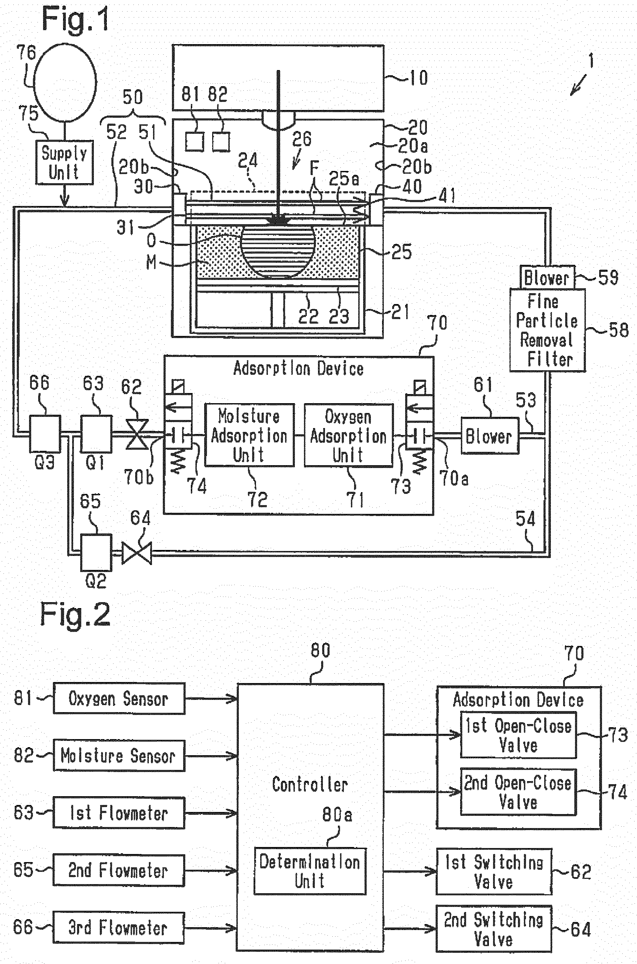

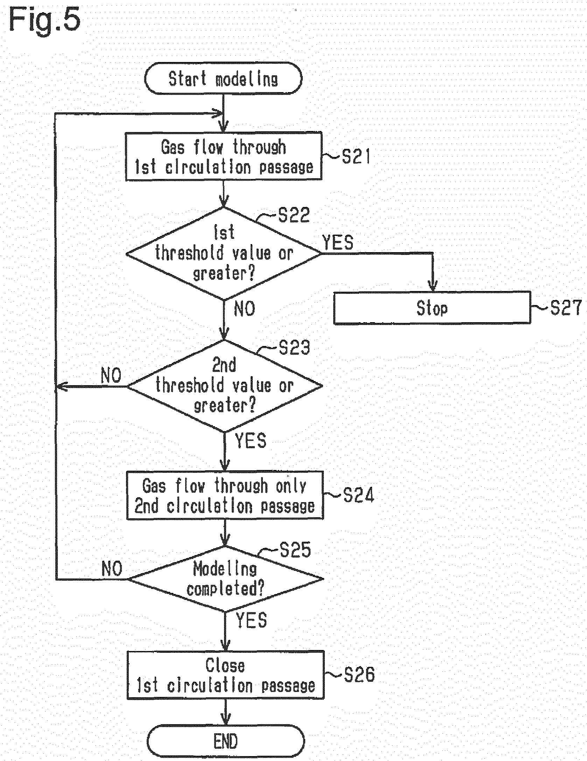

A modeling apparatus according to one embodiment will now be described with reference to Figs. 1 to 8.

First, the configuration of the modeling apparatus will be summarized with reference to Fig. 1.

As shown in Fig. 1, a modeling apparatus 1 includes a modeling unit 20 that models a three-dimensional object, a fume removal flow formation unit 26 that supplies inert gas to the modeling unit 20, and an adsorption device 70 that adsorbs oxygen and moisture from the circulated gas. The interior of the modeling unit 20 (hereinafter referred to as "the chamber 20a") is to be with inert gas. Argon (Ar) gas is used as the inert gas. A fume removal flow is a flow used to remove fumes, and the concept thereof includes a laminar flow.

The modeling unit 20 includes a container 21, a recoater 24, and a laser irradiation unit 10. The container 21 includes a modeling table 22 that supports a three-dimensional model O. The recoater 24 stacks a powder layer 25 having a predetermined thickness and formed from the powdered material M on the modeling table 22. The laser irradiation unit 10 irradiates the powder layer 25 on the modeling table 22 with a laser beam.

The modeling table 22 of the container 21 can be lifted and lowered in the vertical direction and is lowered for an amount corresponding to one sublayer whenever one sublayer of the powder layer 25 is solidified. A modeling plate 23, which serves as a rest for the three-dimensional model O, is set on the upper surface of the modeling table 22.

Whenever one sublayer of the powder layer 25 is solidified, the recoater 24 forms another new sublayer of the powder layer 25 on the modeling plate 23. The powder layer 25 stacked on the modeling table 22 (modeling plate 23) includes a surface located toward the laser irradiation unit 10 defining a laser-irradiated surface 25a irradiated with the laser.

The laser irradiation unit 10 scans a laser beam emitted from a laser oscillator (not shown) with a scanning system such as galvano mirrors to irradiate a desired position on the laser-irradiated surface 25a of the powder layer 25 with the laser beam.

The fume removal flow formation unit 26 supplies the chamber 20a with fresh Inert gas and circulates the inert gas supplied to the chamber 20a. The fume removal flow formation unit 26 includes a circulation passage 50 that circulates the inert gas.

The fume removal flow formation unit 26 includes a discharge portion 30 and a suction portion 40. The discharge portion 30 includes discharge ports 31 that discharge Inert gas for removing fumes into the chamber 20a. The suction portion 40 includes suction ports 41 that suction the inert gas discharged out of the discharge ports 31. The fume removal flow formation unit 26 forms a fume removal flow F above the powder layer 25 and along the laser-irradiated surface 25a with the gas discharged out of the discharge ports 31. The fume removal flow F is a laminar flow of gas formed above the powder layer 25 and along the laser-irradiated surface 25a.

The circulation passage 50 includes a first passage 51, extending from the discharge ports 31 to the suction ports 41 through the chamber 20a, and a second passage 52, extending from the suction ports 41 to the discharge ports 31 outside the chamber 20a. The second passage 52 is a circulation passage connecting the suction ports 41 and the discharge ports 31 and circulates inert gas from the suction ports 41 to the discharge ports 31.

A fine particle removal filter 58 is arranged downstream of the suction ports 41 in the second passage 52 to remove fine particles or the like from the inert gas. The fine particle removal filter 58 includes a blower 59. The blower 59 blows the inert gas into the fine particle removal filter 58. In this manner, fine particles or the like are removed before the inert gas enters the adsorption device 70. This limits clogging in the adsorption device 70 and reduces the replacement frequency of a filter.

The second passage 52 includes branching passages that branch downstream of the fine particle removal filter 58 and merge upstream of the discharge ports 31. The branching passage includes a first branching passage 53 and a second branching passage 54. The first branching passage 53 corresponds to a first circulation passage in which the adsorption device 70 is arranged. The second branching passage 54 corresponds to a second circulation passage in which the adsorption device 70 is not arranged.

A blower 61 is arranged upstream of the adsorption device 70 in the first branching passage 53. The blower 61 compensates for the flow amount of gas decreased when passing through the adsorption device 70. A first switching valve 62 and a first flowmeter 63 are sequentially arranged downstream of the adsorption device 70 in the first branching passage 53. The first switching valve 62 is, for example, a butterfly valve. In accordance with an instruction from the outside, the first switching valve 62 changes the flow amount of gas passing through the first branching passage 53 and also closes the first branching passage 53. The first flowmeter 63, which is of a diaphragm or ultrasonic wave type, measures and outputs the flow amount of the inert gas flowing through the first branching passage 53. The flow amount measured by the first flowmeter 63 is denoted by Q1.

The second branching passage 54, in which the adsorption device 70 is not arranged, includes a second switching valve 64 and a second flowmeter 65 sequentially arranged from the upper stream. The second switching valve 64 is, for example, a butterfly valve. In accordance with an instruction from the outside, the second switching valve 64 changes the flow amount of gas passing through the second branching passage 54 and also closes the second branching passage 54. The second flowmeter 65, which is of a diaphragm or ultrasonic wave type, measures and outputs the flow amount of the inert gas flowing through the second branching passage 54. The flow amount measured by the second flowmeter 65 is denoted by Q2. The maximum flow amount of the second branching passage 54 is equal to or greater than the flow amount of the gas required to be discharged into the chamber 20a.

A third flowmeter 66 is arranged in the second passage 52 between the portion where the first branching passage 53 and the second branching passage 54 merge and the discharge ports 31. The third flowmeter 66, which is of a diaphragm or ultrasonic wave type, measures and outputs the flow amount of the inert gas flowing through the lower stream of the portion where the first branching passage 53 and the second branching passage 54 merge in the second passage 52. The flow amount measured by the third flowmeter 66 is denoted by Q3.

The adsorption device 70 includes an oxygen adsorption unit 71 that decreases the concentration of the oxygen in the inert gas passing through the first branching passage 53. The oxygen adsorption unit 71 includes a catalyst that adsorbs oxygen. The oxygen adsorption unit 71 may include two systems that are alternately regenerated to allow for continuous use. Further, the adsorption device 70 includes a moisture adsorption unit 72 that decreases the concentration of the moisture In the inert gas passing through the first branching passage 53. The moisture adsorption unit 72 is provided with a filter including a hollow fiber membrane that removes moisture or a filter including silica gel that adsorbs moisture. The moisture adsorption unit 72 may include two systems that are alternately regenerated to allow for continuous use. The adsorption device 70 adsorbs the oxygen and moisture included in the inert gas and releases the adsorbed oxygen and moisture into the atmosphere when appropriate.

The adsorption device 70 includes an inlet 70a through which inert gas enters and an outlet 70b through which inert gas exits. A first open-close valve 73, which serves as an inlet valve that opens and closes the inlet 70a, is arranged in the inlet 70a. The first open-close valve 73 is a two-position electromagnetic valve that is closed normally and opened when energized. A second open-close valve 74, which serves as an outlet valve that opens and closes the outlet 70b, is arranged in the outlet 70b. The second open-close valve 74 is a two-position electromagnetic valve that is closed normally and opened when energized.

A supply unit 75 that supplies fresh inert gas is arranged upstream of the discharge ports 31 in the second passage 52. The supply unit 75 continuously supplies a fixed amount of fresh inert gas from a tank 76 to the second passage 52 while the modeling apparatus 1 is functioning.

The fume removal flow formation unit 26 forms the fume removal flow F above the powder layer 25. The fume removal flow F has a height and width that can be freely set in accordance with, for example, the modeling material and modeling method. Preferably, the fume removal flow F is formed at a height including the height at which sputter flies.

The discharge ports 31 and the suction ports 41 are arranged in the discharge portion 30 and the suction portion 40 facing each other at positions located on opposite sides of the powder layer 25. The discharge portion 30 and the suction portion 40 are arranged in opposing side walls 20b of the chamber 20a.

The electrical configuration of the modeling apparatus 1 will now be described with reference to Fig. 2.

As shown in Fig. 2, the modeling apparatus 1 includes a controller 80 that controls the modeling apparatus 1. The controller 80 controls the container 21, the recoater 24, and the laser irradiation unit 10 to model the three-dimensional model O. Further, the controller 80 executes control for circulating inert gas in the chamber 20a. Fig. 2 does not show the configuration related to the modeling of the three-dimensional model O. The controller 80, the first switching valve 62, and the second switching valve 64 function as a switching unit and function as a flow amount regulation unit.

An oxygen sensor 81 and a moisture sensor 82 are arranged in the chamber 20a. The oxygen sensor 81 measures the oxygen concentration in the chamber 20a and outputs the measurement result to the controller 80. The moisture sensor 82 measures the moisture concentration in the chamber 20a and outputs the measurement result to the controller 80. The first flowmeter 63, the second flowmeter 65, and the third flowmeter 66 each measure the flow amount and output the measurement result to the controller 80.

The controller 80 controls the open degree of the first switching valve 62 in the first branching passage 53 to regulate the flow amount of the inert gas flowing through the first branching passage 53. The controller 80 controls the open degree of the second switching valve 64 in the second branching passage 54 to regulate the flow amount of the inert gas flowing through the second branching passage 54. Further, the controller 80 controls the first open-close valve 73 and the second open-close valve 74 of the adsorption device 70 to switch the adsorption device 70 between open and closed states. The first open-close valve 73 and the second open-close valve 74 are opened and closed in the same manner to limit unnecessary entrance of inert gas into the adsorption device 70. Thus, the controller 80 controls the first switching valve 62 and the second switching valve 64 to control the circulation of inert gas through the circulation passage 50.

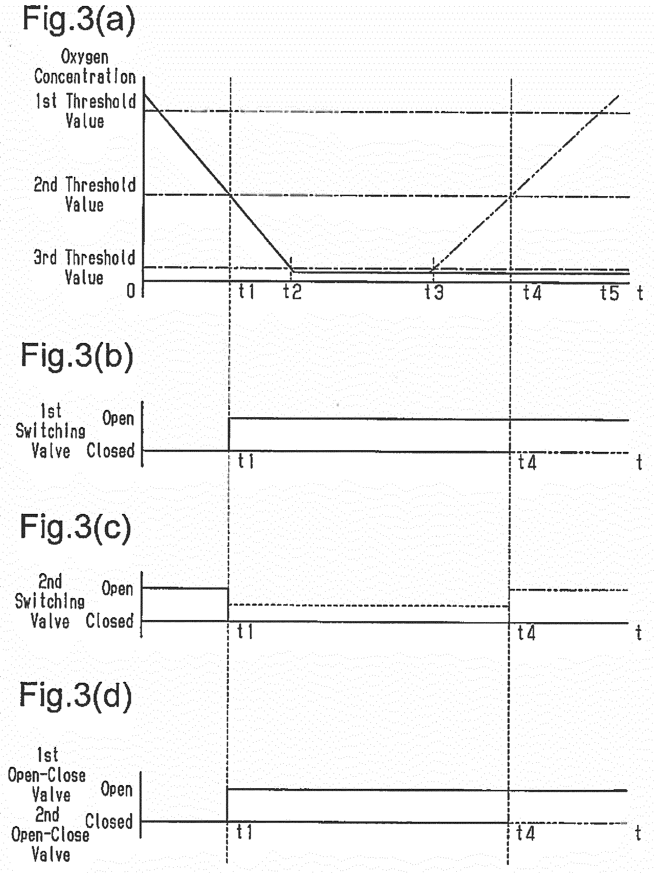

The controller 80 includes a determination unit 80a that determines whether or not the chamber 20a is filled with inert gas after the modeling apparatus 1 is activated. Immediately after the modeling apparatus 1 is activated (modeling preparation stage), the adsorption amount of the adsorption device 70 may reach the upper limit because the oxygen concentration and the moisture concentration are high in the chamber 20a. Accordingly, the determination unit 80a determines whether or not the chamber 20a is filled with inert gas based on whether or not the oxygen concentration in the chamber 20a is less than or equal to a predetermined value. That is, as shown in Fig. 3(a), the determination unit 80a determines that the chamber 20a is filled with inert gas when the oxygen concentration is less than or equal to a third threshold value that serves as the predetermined value. The third threshold value is, for example, 100 ppm.

With reference to Figs. 3(a) to 3(d), the control executed by the controller 80 based on the oxygen concentration will now be described.

Referring to Fig. 3(a), the determination unit 80a sets a first threshold value, a second threshold value, and a third threshold value for the oxygen concentration. When the oxygen concentration is greater than or equal to the first threshold value, the oxygen concentration in the chamber 20a is too high. This state is not suitable for modeling the three-dimensional model O. As shown in Figs. 3(b), 3(c), and 3(d), if the oxygen concentration is greater than or equal to the first threshold value, the controller 80 closes the first switching valve 62 so that inert gas does not pass through the first branching passage 53 and opens the second switching valve 64 so that inert gas passes through only the second branching passage 54. Further, in this case, the controller 80 closes the first open-close valve 73 and the second open-close valve 74 of the adsorption device 70 so that inert gas of which the oxygen concentration is high does not enter the adsorption device 70. The first threshold value is, for example, 2,000 ppm, and the second threshold value is, for example, 1,000 ppm.

Referring to Fig. 3(a), if the oxygen concentration is greater than or equal to the second threshold value, the oxygen concentration in the chamber 20a is relatively high. Thus, if inert gas passes through the adsorption device 70, there is a high likelihood that the adsorption amount of the adsorption device 70 will reach the upper limit (breakthrough). As shown in Figs. 3(b), 3(c), and 3(d), if the oxygen concentration is greater than or equal to the second threshold value, the controller 80 closes the first switching valve 62 and opens the second switching valve 64 in the same manner as the case in which the oxygen concentration is greater than or equal to the first threshold value. In contrast, if the oxygen concentration is less than the second threshold value, the controller 80 opens the first switching valve 62 so that inert gas passes through the first branching passage 53 and closes the second switching valve 64 so that inert gas does not pass through the second branching passage 54. Further, in this case, the controller 80 opens the first open-close valve 73 and the second open-close valve 74 of the adsorption device 70 so that inert gas passes through the adsorption device 70 to reduce oxygen and moisture.

When inert gas passes through the adsorption device 70 in a case in which the oxygen concentration is less than the second threshold value, in addition to the first branching passage 53, the inert gas can also pass through the second branching passage 54. More specifically, an increase in the amount of inert gas supplied to the chamber 20a may cause the adsorption device 70 to reach the limit of its adsorption capacity before releasing oxygen and moisture. If the amount of supplied gas discharged into the chamber 20a is restricted so as not to reach the limit of the adsorption capacity, the amount of gas discharged into the chamber 20a may not be enough to remove fumes. Thus, when the flow amount of inert gas passing through the first branching passage 53 is less than the flow amount of the inert gas required to be supplied to the chamber 20a, the second branching passage 54 is used to allow for the passage of inert gas so that the required flow amount of inert gas is discharged into the chamber 20a. The controller 80 sustains the required flow amount for the inert gas supplied to the chamber 20a, and the third flowmeter 66 measures the flow amount of the inert gas discharged into the chamber 20a. Further, the controller 80 controls the second switching valve 64 and regulates the flow amount of the inert gas passing through the second branching passage 54 to compensate for the insufficient flow amount of inert gas.

Referring to Fig. 3(a), if the oxygen concentration is less than or equal to the third threshold value, the oxygen concentration in the chamber 20a is low. Thus, even if the inert gas passes through the adsorption device 70, the adsorption amount of the adsorption device 70 will not reach the upper limit and the conditions are satisfied for starting modeling. As shown in Figs. 3(b), 3(c), and 3(d), if the oxygen concentration is less than or equal to the third concentration, the controller 80 opens the first switching valve 62 so that inert gas passes through the first branching passage 53 and closes the second switching valve 64 so that inert gas does not pass through the second branching passage 54 in the same manner as when the oxygen concentration is less than the second threshold value. Further, in this case, the controller 80 opens the first open-close valve 73 and the second open-close valve 74 of the adsorption device 70 so that inert gas passes through the adsorption device 70 to reduce oxygen and moisture.

If the modeling of the three-dimensional model O is completed, the controller 80 closes the first open-close valve 73 and the second open-close valve 74 to close the inlet 70a and the outlet 70b of the adsorption device 70 so that inert gas does not enter the adsorption device 70. Further, the controller 80 closes the first switching valve 62 so that inert gas does not pass through the first branching passage 53.

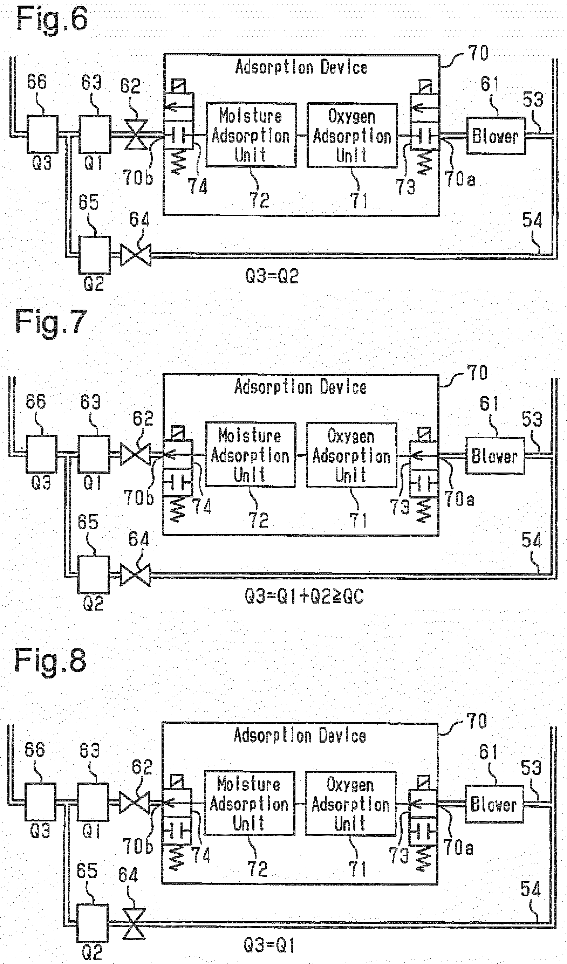

Referring to Figs. 1 to 8, the operation of the modeling apparatus 1 will now be described. As shown in Fig. 6, prior to activation of the modeling apparatus 1, the first switching valve 62 is closed, the second switching valve 64 is open, and the first open-close valve 73 and the second open-close valve 74 are closed.

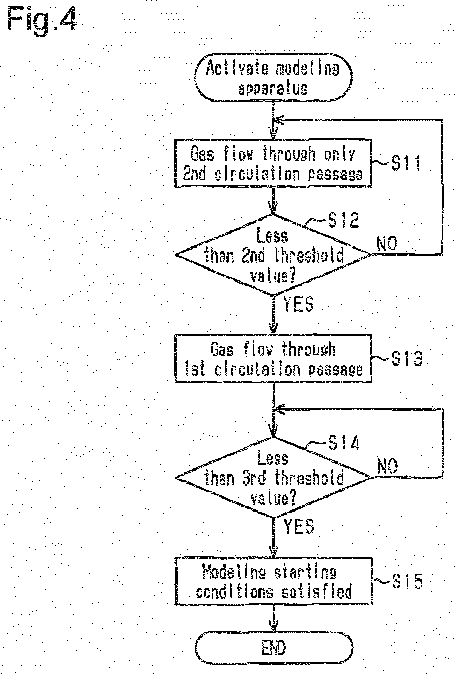

First, as shown in Fig. 4, when the modeling apparatus 1 is activated, the controller 80 supplies and circulates inert gas to fill the chamber 20a with inert gas. That is, the controller 80 drives the blower 59 and circulates inert gas while supplying inert gas from the supply unit 75 to the circulation passage 50.

The controller 80 has the inert gas flow through only the second branching passage 54 that serves as a second circulation passage (step S11). Immediately after the modeling apparatus 1 is activated, gas passes through only the second branching passage 54, in which the adsorption device 70 is not arranged, so that the adsorption amount of the adsorption device 70 does not reach the upper limit. More specifically, as shown in Fig. 6, the controller 80 maintains the state before the activation, in which the first switching valve 62 is closed, the second switching valve 64 is open, and the first open-close valve 73 and the second open-close valve 74 are closed. In this case, the flow amount Q3 measured by the third flowmeter 66 coincides with the flow amount Q2 measured by the second flowmeter 65 (Q3 = Q2). As shown in Figs. 3(a) to 3(d), the supply of inert gas decreases the oxygen concentration that was greater than or equal to the first threshold value.

Then, as shown In Fig. 4, the controller 80 determines whether or not the oxygen concentration in the chamber 20a is less than or equal to the second threshold value (step S12). That is, the determination unit 80a compares the oxygen concentration measured by the oxygen sensor 81 with the second threshold value. If the determination unit 80a determines that the oxygen concentration in the chamber 20a is greater than or equal to the second threshold value (step S12: NO), the controller 80 proceeds to step S11.

If the determination unit 80a determines that the oxygen concentration in the chamber 20a is less than the second threshold value (step S12: YES), the controller 80 has the inert gas flow through the first branching passage 53 that serves as a first circulation passage (step S13). At timing t1 shown in Figs. 3(a) to 3(d), the oxygen concentration that was greater than or equal to the first threshold value is decreased by the supply of inert gas to less than the second threshold value. That is, the oxygen concentration is relatively low in the chamber 20a and the adsorption amount of the adsorption device 70 will not reach the upper limit. Thus, gas is allowed to pass through the first branching passage 53 that includes the adsorption device 70 to adsorb the oxygen and moisture from the gas. More specifically, as shown in Fig. 8, the controller 80 opens the first switching valve 62, closes the second switching valve 64, opens the first open-close valve 73 and the second open-close valve 74, and drives the blower 61 so that gas passes through only the first branching passage 53. Referring to Fig. 7, if the flow amount Q1 of the gas passing through the first branching passage 53 is not enough to obtain the flow amount QC of the gas required to be discharged into the chamber 20a (Q1 < QC), the controller 80 opens the second switching valve 64 so that gas passes through the second branching passage 54, As a result, the flow amount QC of the gas required to be discharged into the chamber 20a becomes less than or equal to the sum of the flow amount Q1 of the first branching passage 53 and the flow amount Q2 of the second branching passage 54 (Q3 = Q1 + Q2), (Q3 = Q1 + Q2 ≥ QC). As shown by the dashed line in Fig. 3(c), the controller 80 opens the second switching valve 64 in accordance with the required flow amount.

Then, as shown in Fig. 4, the controller 80 determines whether or not the oxygen concentration in the chamber 20a is less than the third threshold value (step S14), More specifically, the determination unit 80a compares the oxygen concentration of the oxygen sensor 81 with the third threshold value, If the determination unit 80a determines that the oxygen concentration in the chamber 20a is greater than or equal to the third threshold value (step S14: NO), the comparison is continued until the oxygen concentration in the chamber 20a becomes less than the third threshold value.

If the determination unit 80a determines that the oxygen concentration in the chamber 20a is less than the third threshold value (step S14: YES), the controller 80 determines that the starting conditions have been satisfied for modeling the three-dimensional model O (step S15). At timing t2 shown in Figs. 3(a) to 3(d), the supply of inert gas further decreases the oxygen concentration to less than the third threshold value. That is, the oxygen concentration in the chamber 20a is sufficiently low. Further, oxidation and moisture content will be less than specified values when modeling the three-dimensional model O. Thus, modeling of the three-dimensional model O is allowed to be started, and processing is ended.

As shown in Fig. 4, if the modeling apparatus 1 starts modeling, the controller 80 continues to supply and circulate inert gas to remove fumes or the like generated as the three-dimensional model O is modeled. More specifically, the controller 80 drives the blower 59 and circulates inert gas while supplying inert gas from the supply unit 75 to the circulation passage 50.

The modeling apparatus 1 manufactures the three-dimensional model O by alternately performing a process for forming the powder layer 25 from the powdered material M and a process for irradiating the laser-irradiated surface 25a of the powder layer 25 with laser to partially solidify the powder layer 25.

When the powder layer 25 is irradiated with laser, the inert gas of which the oxygen concentration and moisture concentration have been decreased by the adsorption device 70 form the fume removal flow F along the laser-irradiated surface 25a.

When the laser-irradiated surface 25a of the powder layer 25 is irradiated with laser, fumes are generated from the laser-irradiated portion. Further, sputter is dispersed. The fumes generated from the laser-irradiated portion are immediately carried by the fume removal flow F and suctioned by the suction ports 41 without rising and blocking the path of the laser. Further, the sputter dispersed from the laser-irradiated portion is dispersed into the fume removal flow F of which the oxygen concentration and moisture concentration have been decreased. This limits oxidation of the sputter during dispersing. Thus, falling of the sputter due to oxidation is also limited. Moreover, the fume removal flow F is formed by the inert gas of which the oxygen concentration and moisture concentration have been decreased by the adsorption device 70. This limits oxidation of the powdered material M of the powder layer 25 that would be caused by the fume removal flow F. In this manner, oxidation of the powdered material M, that is, oxidation of the three-dimensional model O is limited by modeling the three-dimensional model O while supplying the chamber 20a with inert gas of which the oxygen concentration and moisture concentration have been decreased.

While the three-dimensional model O is being modeled, the controller 80 causes gas to flow through the first branching passage 53, which serves as the first circulation passage (step S21). Then, the controller 80 determines whether or not the oxygen concentration in the chamber 20a is greater than or equal to the first threshold value (step S22). That is, the determination unit 80a compares the oxygen concentration measured by the oxygen sensor 81 with the first threshold value. In a case in which the oxygen concentration in the chamber 20a is greater than or equal to the first threshold value (step S22: NO), the oxygen concentration is too high in the chamber 20a. Thus, the modeling of the three-dimensional model O is stopped (step S27). At timing t5 shown in Fig. 3, the oxygen concentration is greater than or equal to the first threshold value if inert gas is no longer supplied or oxygen flows into the chamber 20a.

If the determination unit 80a determines that the oxygen concentration in the chamber 20a is less than the first threshold value (step S22: YES), the determination unit 80a then determines whether or not the oxygen concentration in the chamber 20a is less than or equal to the second threshold value (step S23). That is, the determination unit 80a compares the oxygen concentration measured by the oxygen sensor 81 with the second threshold value. If the determination unit 80a determines that the oxygen concentration of the chamber 20a is less than the second threshold value (step S23: NO), the controller 80 proceeds to step S21.

If the determination unit 80a compares the oxygen concentration measured by the oxygen sensor 81 with the second threshold value and determines that the oxygen concentration in the chamber 20a is greater than or equal to the second threshold value (step S23: YES), the controller 80 causes inert gas to flow through only the second branching passage 54, which serves as the second circulation passage (step S24). At timing t4 shown in Fig. 3, inert gas is no longer supplied or oxygen flows into the chamber 20a. Thus, the oxygen concentration increases to the second threshold value or greater.

Then, the controller 80 determines whether or not modeling of the three-dimensional model O has been completed (step S25). If modeling of the three-dimensional model O has not been completed (step S25: NO), the controller 80 proceeds to step S21. During modeling of the three-dimensional model O, the inert gas is continuously supplied and circulated. Thus, the controller 80 repeats the processes described above.

If modeling of the three-dimensional model O has been completed (step S25: YES), the controller 80 closes the first branching passage 53, which serves as the first circulation passage, (step S26) and processing is ended. That is, the controller 80 closes the first switching valve 62 so that gas does not enter the adsorption device 70 and closes the first open-close valve 73 and the second open-close valve 74 to seal the adsorption device 70. The controller 80 also stops driving the blower 59 and the blower 61.

As described above, the present embodiment has the following advantages.
(1) Gas does not pass through the adsorption device 70 from when the modeling apparatus 1 is activated to when the chamber 20a is filled with the gas (modeling preparation stage). This avoids situations in which the adsorption amount of oxygen and moisture in the adsorption device 70 reaches the upper limit.
(2) Direct determination is performed based on the oxygen concentration in the chamber 20a. This effectively avoids situations in which the adsorption amount of oxygen in the adsorption device 70 reaches the upper limit.
(3) After modeling of the three-dimensional model is completed, unnecessary gas does not pass through the adsorption device 70. This limits decreases in the performance of the adsorption device 70 caused by the passage of gas.
(4) After modeling of the three-dimensional model O is completed, the inlet 70a and the outlet 70b of the adsorption device 70 are closed. Thus, the formation of a sealed space limits decreases in the performance of the adsorption device 70.

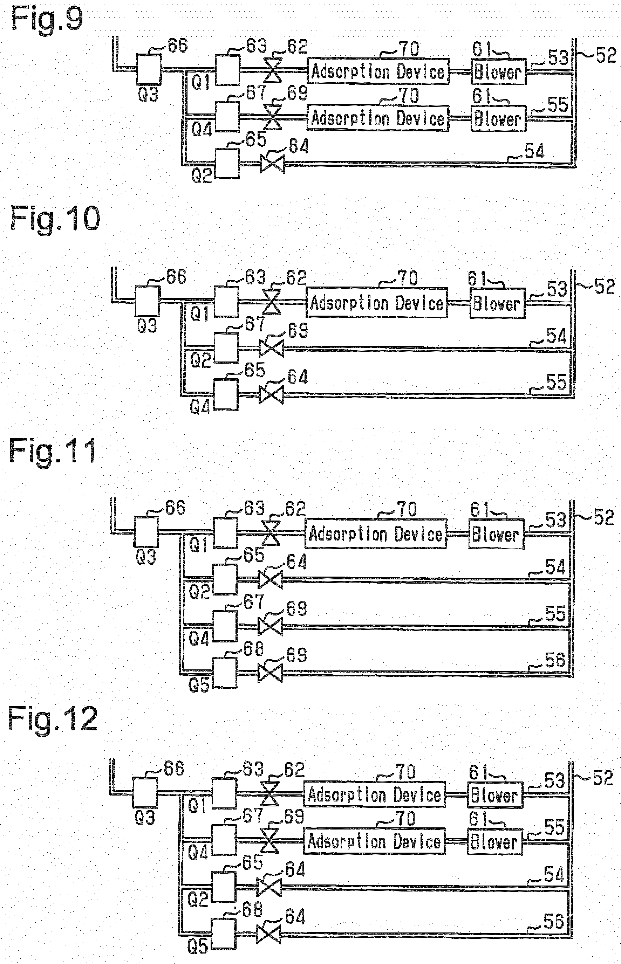

The embodiment described above may be modified in the following forms.
- In the embodiment described above, after modeling of the three-dimensional model O is completed, the inlet 70a and the outlet 70b of the adsorption device 70 are closed. However, the inlet 70a and the outlet 70b of the adsorption device 70 do not have to be closed.
- The first open-close valve 73 and the second open-close valve 74 may be omitted.
- In the above embodiment, the blower 61 may be omitted from the first branching passage 53.
- In the above embodiment, upon completion of the modeling of the three-dimensional model O, gas passes through only the second branching passage 54. However, upon completion of the three-dimensional model O, gas may continuously pass through the first branching passage 53 and the second branching passage 54.
- In the above embodiment, the controller 80 switches the first branching passage 53 and the second branching passage 54 based on the oxygen concentration in the chamber 20a determined by the determination unit 80a. However, the determination unit 80a may determine that the chamber 20a has been filled with gas if a cumulative value of the flow amount of the gas measured by a flowmeter reaches a predetermined amount calculated in advance from the volume of the chamber 20a. This allows for determinations to be performed without using a plurality of costly oxygen sensors. Further, as long as the flow amount is constant, the predetermined amount calculated in advance from the volume of the chamber 20a may be divided by a flow amount of the gas to estimate the time in which the chamber 20a is filled with gas. Thus, the determination unit 80a may use a timer incorporated in the controller 80 to determine that the chamber 20a is filled with gas based on the elapsed time from when gas starts to flow. This allows for determination without using a special sensor dedicated for determination.
- In the above embodiment, the adsorption device 70 may adsorb hydrogen from gas to remove the hydrogen from the gas.
- In the above embodiment, the maximum flow amount of the second branching passage 54 may be less than the flow amount of gas that is required to be discharged into the chamber 20a.
- In the above embodiment, oxygen and moisture are both adsorbed by the adsorption device 70. However, the adsorption device 70 may adsorb only one of oxygen and moisture.
- In the above embodiment, the chamber 20a is filled with Ar gas that serves as the inert gas. However, for example, He gas, Ne gas, or N gas may be used instead of Ar gas. Further, the chamber 20a may be filled with CO gas. Alternatively, the chamber may be filled with H gas as long as the hydrogen brittleness is low.
- In the above embodiment, the second passage 52 of the circulation passage 50 includes the two branching passages, namely, the first branching passage 53 and the second branching passage 54. However, the second passage 52 of the circulation passage 50 may include a plurality of first circulation passages and a plurality of second circulation passages. For example, as shown in Fig. 9, the second passage 52 may include the first branching passage 53 and a third branching passage 55 that correspond to the first circulation passage and the second branching passage 54 that corresponds to the second circulation passage. As shown in Fig. 10, the second passage 52 may include the first branching passage 53 that corresponds to the first circulation passage and the second branching passage 54 and the third branching passage 55 that correspond to the second circulation passage. As shown in Fig. 11, the second passage 52 may include the first branching passage 53 that corresponds to the first circulation passage and the second branching passage 54, the third branching passage 55, and a fourth branching passage 56 that correspond to the second circulation passage. As shown in Fig. 12, the second passage 52 may include the first branching passage 53 and the third branching passage 55 that correspond to the first circulation passage and the second branching passage 54 and the fourth branching passage 56 that correspond to the second circulation passage.

The present invention is not limited to the illustrated examples. For example, all of the features of a specific disclosed embodiment are not to be interpreted as being essential to the present invention. The subject matter of the present invention may be in features that are less than all of the features of a specific disclosed embodiment as long as being within the features of appended claim 1.

### DESCRIPTION OF REFERENCE CHARACTERS

1) modeling apparatus; 10) laser irradiation unit; 20) modeling unit; 20a) chamber; 20b) side wall; 21) container; 22) modeling table; 23) modeling plate; 24) recoater; 25) powder layer; 25a) laser-irradiated surface; 26) fume removal flow formation unit; 30) discharge portion; 31) discharge port; 40) suction portion; 41) suction port; 50) circulation passage; 51) first passage; 52) second passage; 53) first branching passage; 54) second branching passage; 55) third branching passage; 56) fourth branching passage; 58) fine particle removal filter; 59) blower; 61) blower; 62) first switching valve; 63) first flowmeter; 64) second switching valve; 65) second flowmeter; 66) third flowmeter; 67) fourth flowmeter; 68) fifth flowmeter; 70) adsorption device; 70a) inlet; 70b) outlet; 71) oxygen adsorption unit; 72) moisture adsorption unit; 73) first open-close valve; 74) second open-close valve; 75) supply unit; 76) tank; 80) controller; 80a) determination unit; 81) oxygen sensor; 82) moisture sensor; 83) first flowmeter; 84) second flowmeter; 85) third flowmeter; F) fume removal flow; M) powdered material; O) three-dimensional model.

## Claims

1. A modeling apparatus (1) that is configured to manufacture a three-dimensional model (O) by repeating a process of irradiating a powder layer (25) formed from a powdered material (M) with laser to partially solidify the powder layer (25), the modeling apparatus (1) comprising:
a discharge port (31) that is configured to discharge gas for removing fumes into a chamber (20a);
a suction port (41) that is configured to suction the gas from the chamber (20a);
an adsorption device (70) that is configured to adsorb at least one of oxygen and moisture from the gas;
a plurality of circulation passages that connect the discharge port (31) and the suction port (41) and circulate the gas from the suction port (41) to the discharge port (31), wherein the circulation passages include a first circulation passage (53) in which the adsorption device (70) is arranged and a second circulation passage (54) in which the adsorption device (70) is not arranged;
a determination unit (80a) that is configured to determine whether the chamber (20a) is filled with the gas; and
a switching unit, **characterised in that** the switching unit is configured to switch a circulation state of the gas in the circulation passages so that the gas passes through only the second circulation passage (54), among the first circulation passage (53) and the second circulation passage (54), until the determination unit (80a) determines that the chamber (20a) is filled with the gas and so that the gas passes through at least the first circulation passage (53), among the first circulation passage (53) and the second circulation passage (54), from when the determination unit (80a) determines that the chamber (20a) is filled with the gas.

2. The modeling apparatus (1) according to claim 1, further comprising a flowmeter that is configured to detect a flow amount of the gas flowing through the second circulation passage (54), wherein the determination unit (80a) is configured to determine that the chamber (20a) is filled with the gas if a cumulative value of the flow amount of the gas detected by the flowmeter reaches a predetermined amount.

3. The modeling apparatus (1) according to claim 1 or 2, further comprising an oxygen concentration detector that is configured to detect an oxygen concentration in the chamber (20a), wherein
the adsorption device (70) includes an oxygen adsorption unit (71) that is configured to adsorb oxygen, and
the determination unit (80a) is configured to determine whether or not the chamber (20a) is filled with the gas based on whether or not the oxygen concentration in the chamber (20a) is less than or equal to a predetermined value.

4. The modeling apparatus (1) according to claim 1, wherein the determination unit (80a) is configured to determine that the chamber (20a) is filled with the gas if a preset time elapses from when the discharge of the gas is started.

5. The modeling apparatus (1) according to any one of claims 1 to 4, wherein upon completion of modeling of the three-dimensional model (O), the switching unit is configured to perform switching so that the gas passes through only the second circulation passage (54), among the first circulation passage (53) and the second circulation passage (54).

6. The modeling apparatus (1) according to claim 5, wherein the adsorption device (70) includes an inlet valve (73) that is configured to close an inlet through which the gas flows into the adsorption device (70) and an outlet valve (74) that is configured to close an outlet through which the gas flows out of the adsorption device (70).

## Patentansprüche

1. Modelliereinrichtung (1), die dafür konfiguriert ist, ein dreidimensionales Modell (O) herzustellen, indem sie einen Prozess wiederholt, bei dem eine Pulverschicht (25), die von einem pulverigen Material (M) gebildet wird, mit einem Laser bestrahlt wird, um die Pulverschicht (25) teilweise zu verfestigen, wobei die Modelliereinrichtung (1) umfasst:
eine Abgabeöffnung (31), die dafür konfiguriert ist, Gas zum Entfernen von Abgasen in eine Kammer (20a) abzugeben;
eine Ansaugöffnung (41), die dafür konfiguriert ist, das Gas aus der Kammer (20a) anzusaugen;
eine Adsorptionsvorrichtung (70), die dafür konfiguriert ist, wenigstens eines von Sauerstoff und Feuchtigkeit aus dem Gas zu adsorbieren;
mehrere Zirkulationskanäle, die die Abgabeöffnung (31) und die Ansaugöffnung (41) verbinden und das Gas von der Ansaugöffnung (41) zu der Abgabeöffnung (31) zirkulieren lassen, wobei die Zirkulationskanäle einen ersten Zirkulationskanal (53), in dem die Adsorptionsvorrichtung (70) angeordnet ist, und einen zweiten Zirkulationskanal (54), in dem die Adsorptionsvorrichtung (70) nicht angeordnet ist, beinhalten;
eine Bestimmungseinheit (80a), die dafür konfiguriert ist zu bestimmen, ob die Kammer (20a) mit dem Gas gefüllt ist; und
eine Schalteinheit,
**dadurch gekennzeichnet, dass**
die Schalteinheit dafür konfiguriert ist, einen Zirkulationszustand des Gases in den Zirkulationskanälen derart zu schalten, dass das Gas nur durch den zweiten Zirkulationskanal (54) von dem ersten Zirkulationskanal (53) und dem zweiten Zirkulationskanal (54) strömt, bis die Bestimmungseinheit (80a) bestimmt, dass die Kammer (20a) mit dem Gas gefüllt ist, und derart zu schalten, dass ab dann, wenn die Bestimmungseinheit (80a) bestimmt, dass die Kammer (20a) mit dem Gas gefüllt ist, das Gas wenigstens durch den ersten Zirkulationskanal (53) von dem ersten Zirkulationskanal (53) und dem zweiten Zirkulationskanal (54) strömt.

2. Modelliereinrichtung (1) nach Anspruch 1, des Weiteren umfassend einen Flussmesser, der dafür konfiguriert ist, eine Flussmenge des Gases, die durch den zweiten Zirkulationskanal (54) fließt, zu detektieren, wobei die Bestimmungseinheit (80a) dafür konfiguriert ist zu bestimmen, dass die Kammer (20a) mit dem Gas gefüllt ist, wenn ein kumulativer Wert der Flussmenge des Gases, die von dem Flussmesser detektiert wird, eine vorbestimmte Menge erreicht.

3. Modelliereinrichtung (1) nach Anspruch 1 oder 2, des Weiteren umfassend einen Sauerstoffkonzentrationsdetektor, der dafür konfiguriert ist, eine Sauerstoffkonzentration in der Kammer (20a) zu detektieren, wobei
die Adsorptionsvorrichtung (70) eine Sauerstoffadsorptionseinheit (71) beinhaltet, die dafür konfiguriert ist, Sauerstoff zu adsorbieren, und
die Bestimmungseinheit (80a) dafür konfiguriert ist, auf Grundlage dessen, ob die Sauerstoffkonzentration in der Kammer (20a) kleiner oder gleich einem vorbestimmten Wert ist, zu bestimmen, ob die Kammer (20a) mit dem Gas gefüllt ist.

4. Modelliereinrichtung (1) nach Anspruch 1, wobei die Bestimmungseinheit (80a) dafür konfiguriert ist zu bestimmen, dass die Kammer (20a) mit dem Gas gefüllt ist, wenn eine voreingestellte Zeit ab dann, wenn die Abgabe des Gases beginnt, verstrichen ist.

5. Modelliereinrichtung (1) nach einem der Ansprüche 1 bis 4, wobei bei Beenden der Modellierung des dreidimensionalen Modells (O) die Schalteinheit dafür konfiguriert ist, ein Schalten derart durchzuführen, dass das Gas nur durch den zweiten Zirkulationskanal (54) von dem ersten Zirkulationskanal (53) und dem zweiten Zirkulationskanal (54) strömt.

6. Modelliereinrichtung (1) nach Anspruch 5, wobei die Adsorptionsvorrichtung (70) beinhaltet: ein Einlassventil (73), das dafür konfiguriert ist, einen Einlass, durch den das Gas in die Adsorptionsvorrichtung (70) fließt, zu schließen, und ein Auslassventil (74), das dafür konfiguriert ist, einen Auslass, durch den das Gas aus der Adsorptionsvorrichtung (70) fließt, zu schließen.

## Revendications

1. Appareil de modélisation (1) qui est configuré pour fabriquer un modèle tridimensionnel (O) en répétant un processus d'irradiation d'une couche de poudre (25) formée à partir d'un matériau en poudre (M) avec un laser pour solidifier partiellement la couche de poudre (25), l'appareil de modélisation (1) comprenant :
un orifice de décharge (31) qui est configuré pour décharger un gaz pour éliminer les fumées dans une chambre (20a) ;
un orifice d'aspiration (41) qui est configuré pour aspirer le gaz à partir de la chambre (20a) ;
un dispositif d'adsorption (70) qui est configuré pour adsorber au moins l'un(e) parmi l'oxygène et l'humidité à partir du gaz ;
une pluralité de passages de circulation qui relient l'orifice de décharge (31) et l'orifice d'aspiration (41) et font circuler le gaz de l'orifice d'aspiration (41) à l'orifice de décharge (31), où les passages de circulation comportent un premier passage de circulation (53) dans lequel le dispositif d'adsorption (70) est agencé et un deuxième passage de circulation (54) dans lequel le dispositif d'adsorption (70) n'est pas agencé ;
une unité de détermination (80a) qui est configurée pour déterminer si la chambre (20a) est remplie du gaz ; et
une unité de commutation, **caractérisé en ce que** l'unité de commutation est configurée pour commuter un état de circulation du gaz dans les passages de circulation de sorte que le gaz ne traverse que le deuxième passage de circulation (54), parmi le premier passage de circulation (53) et le deuxième passage de circulation (54), jusqu'à ce que l'unité de détermination (80a) détermine que la chambre (20a) est remplie du gaz et de sorte que le gaz traverse au moins le premier passage de circulation (53), parmi le premier passage de circulation (53) et le deuxième passage de circulation (54), à partir du moment où l'unité de détermination (80a) détermine que la chambre (20a) est remplie du gaz.

2. Appareil de modélisation (1) selon la revendication 1, comprenant en outre un débitmètre qui est configuré pour détecter une quantité d'écoulement du gaz s'écoulant à travers le deuxième passage de circulation (54), où l'unité de détermination (80a) est configurée pour déterminer que la chambre (20a) est remplie du gaz si une valeur cumulée de la quantité d'écoulement du gaz détectée par le débitmètre atteint une quantité prédéterminée.

3. Appareil de modélisation (1) selon la revendication 1 ou 2, comprenant en outre un détecteur de concentration d'oxygène qui est configuré pour détecter une concentration d'oxygène dans la chambre (20a), où
le dispositif d'adsorption (70) comporte une unité d'adsorption d'oxygène (71) qui est configurée pour adsorber l'oxygène, et
l'unité de détermination (80a) est configurée pour déterminer si la chambre (20a) est remplie ou non du gaz selon que la concentration d'oxygène dans la chambre (20a) est inférieure ou égale à une valeur prédéterminée ou non.

4. Appareil de modélisation (1) selon la revendication 1, dans lequel l'unité de détermination (80a) est configurée pour déterminer que la chambre (20a) est remplie du gaz si un temps prédéfini s'est écoulé à partir du moment où la décharge du gaz est démarrée.

5. Appareil de modélisation (1) selon l'une quelconque des revendications 1 à 4, dans lequel, lors de l'achèvement de la modélisation du modèle tridimensionnel (O), l'unité de commutation est configurée pour effectuer une commutation de sorte que le gaz ne traverse que le deuxième passage de circulation (54), parmi le premier passage de circulation (53) et le deuxième passage de circulation (54).

6. Appareil de modélisation (1) selon la revendication 5, dans lequel le dispositif d'adsorption (70) comporte une soupape d'entrée (73) qui est configurée pour fermer une entrée à travers laquelle le gaz s'écoule dans le dispositif d'adsorption (70) et une soupape de sortie (74) qui est configurée pour fermer une sortie à travers laquelle le gaz s'écoule hors du dispositif d'adsorption (70).
